(19) Europäisches Patentamt
European Patent Office
Office européen des brevets

(11) **EP 3 816 427 B1**

(12) **FASCICULE DE BREVET EUROPEEN**

(45) Date de publication et mention de la délivrance du brevet:
**27.03.2024 Bulletin 2024/13**

(21) Numéro de dépôt: **20202975.7**

(22) Date de dépôt: **21.10.2020**

(51) Classification Internationale des Brevets (IPC):
*F02M 26/06* (2016.01)  *F02M 26/49* (2016.01)
*F02M 26/47* (2016.01)  *G01M 15/09* (2006.01)
*F02D 41/00* (2006.01)  *F02D 41/14* (2006.01)

(52) Classification Coopérative des Brevets (CPC):
**F02M 26/06; F02D 41/0077; F02D 41/1448;**
**F02M 26/47; F02M 26/49; G01M 15/09;**
F02D 2041/141; F02M 26/22; F02M 26/35;
Y02T 10/12; Y02T 10/40

(54) **PROCÉDÉ DE DIAGNOSTIC D'UNE FUITE DE GAZ D'UN CIRCUIT DE RECIRCULATION PARTIELLE À BASSE-PRESSION DES GAZ D'ÉCHAPPEMENT D'UN MOTEUR À COMBUSTION INTERNE**

VERFAHREN ZUR DIAGNOSE EINES GASLECKS EINER PARTIELLEN NIEDERDRUCKABGASRÜCKFÜHRUNG EINES VERBRENNUNGSMOTORS

METHOD FOR DIAGNOSING A GAS LEAK FROM A LOW-PRESSURE EXHAUST GAS PARTIAL RECIRCULATION CIRCUIT OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2019 FR 1912109**

(43) Date de publication de la demande:
**05.05.2021 Bulletin 2021/18**

(73) Titulaire: **NEW H POWERTRAIN HOLDING, S.L.U.**
**47008 Valladolid (ES)**

(72) Inventeur: **GUIRAUTON, ALEXANDRE**
**91600 SAVIGNY SUR ORGE (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 085 930      EP-A1- 3 726 043**
**WO-A1-2016/088097    US-A1- 2012 312 283**
**US-A1- 2015 053 186    US-A1- 2015 101 327**
**US-A1- 2018 195 446**

**Description**

**Domaine technique de l'invention**

La présente invention concerne un procédé de diagnostic d'une fuite de gaz d'un circuit de recirculation des gaz d'échappement d'un moteur à combustion interne. Elle concerne plus précisément le diagnostic, sur un circuit de recirculation partielle à basse pression des gaz d'échappement à l'admission du moteur, d'une fuite de gaz dans le dispositif de mesure de la pression différentielle aux bornes dudit circuit de recirculation à basse pression. Elle trouve une application avantageuse dans le domaine de l'automobile.

L'invention concerne également un dispositif de motorisation pour la mise en oeuvre du procédé de régénération selon l'invention.

**Etat de la technique**

Les moteurs à combustion interne modernes, en particulier ceux des véhicules automobiles, sont de plus en plus équipés d'un circuit de recirculation partielle à basse pression des gaz d'échappement à l'admission du moteur. De manière connue en soi, un tel circuit, dit aussi « circuit EGR-LP » (de l'acronyme anglais pour : Exhaust Gas Recycling - Low Pressure) relie le circuit d'échappement au circuit d'admission d'air du moteur, et il est équipé d'une vanne, dite vanne EGR, dont le réglage de l'ouverture permet d'ajuster la proportion des gaz d'échappement qui sont recyclés à l'échappement.

Lorsque le moteur est du type suralimenté par un turbocompresseur, le circuit EGR-LP prend naissance en un point du circuit d'échappement qui est situé en aval de la turbine du turbocompresseur, et de préférence encore derrière des dispositifs de post-traitement des gaz d'échappement qui sont montés en aval de la turbine. Son autre extrémité débouche en un point du circuit d'admission d'air du moteur qui est situé en amont du compresseur du turbocompresseur.

Un tel circuit de recirculation à basse pression est utilisé avantageusement sur les moteurs du type à allumage par compression (Diesel) pour diminuer les émissions d'oxydes d'azote (NOx), dont les rejets dans l'atmosphère extérieure est sévèrement réglementée par la législation sur les véhicules automobiles. Sur les moteurs du type à allumage commandé (fonctionnant notamment à l'essence), on l'utilise essentiellement pour refroidir la charge dans la mesure où ces gaz ne participent pas à la combustion dans les chambres, pour repousser la limite au cliquetis du mélange, et diminuer ainsi la consommation de carburant et par conséquent aussi les émissions de dioxyde de carbone ($CO_2$).

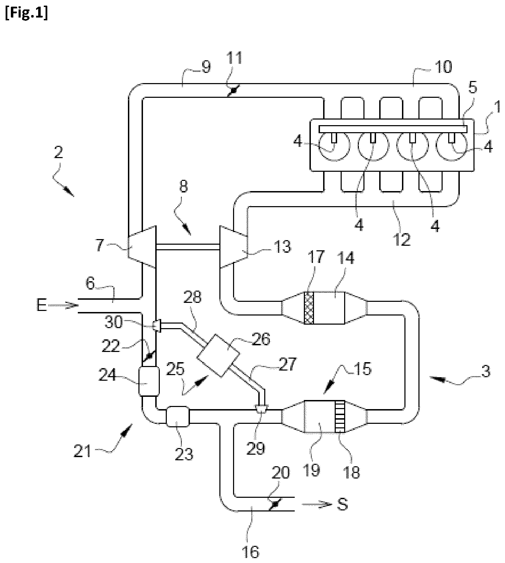

Un exemple d'un tel circuit EGR-LP est illustré par la figure 1. Cette figure représente un moteur à combustion interne 1, qui se présente ici de manière non limitative sous la forme d'un moteur à quatre cylindres en ligne, associé à un circuit d'admission d'air 2 et à un circuit d'échappement 3 des gaz brûlés.

Le moteur est par exemple un moteur à essence suralimenté à injection directe. Les cylindres du moteur sont alimentés en carburant par une pluralité d'injecteurs de carburant 4, par exemple à partir d'une rampe commune 5. Il est alimenté en air par le circuit d'admission d'air 2, dans lequel l'air frais prélevé dans l'atmosphère extérieure pénètre dans le sens de la flèche E. Le circuit d'admission d'air 2 comprend, d'amont en aval dans le sens de circulation de l'air : une conduite d'arrivée d'air 6 ; un compresseur 7 d'un turbocompresseur 8 de suralimentation du moteur ; une conduite de liaison 9 ; et, un collecteur d'admission 10, ou répartiteur 10, du moteur 1.

La conduite d'arrivée d'air 6 peut comporter des composants non représentés sur la figure 1, par exemple un filtre à air, un débitmètre pour la mesure directe du débit d'air Qair pénétrant dans le moteur, un capteur de mesure d'une valeur de pression Pave en amont du compresseur 7, etc.

La conduite de liaison 9 comprend une vanne d'admission 11, ou boîtier-papillon 11, dont le réglage de l'ouverture permet de régler le débit des gaz Qadm pénétrant dans le moteur. Elle peut comprendre en outre d'autres composants non représentés sur la figure 1, par exemple un refroidisseur des gaz comprimés implanté à la sortie du compresseur 7.

Le circuit d'échappement du moteur 3 comprend, d'amont en aval dans le sens de circulation des gaz d'échappement : un collecteur d'échappement 12 ; une turbine 13 du turbocompresseur 8 ; un premier dispositif de post-traitement des gaz d'échappement 14 ; un deuxième dispositif de post-traitement des gaz d'échappement 15 ; et, une tubulure d'échappement 16. Les gaz d'échappement sont évacués dans l'atmosphère extérieure dans le sens de la flèche S.

Le premier dispositif de post-traitement 14 est par exemple un catalyseur trois voies 14, qui peut comprendre des moyens de chauffage 17 tels qu'une grille chauffante électrique. Le deuxième dispositif de post-traitement 15 peut par exemple comporter un deuxième catalyseur trois voies 18 et un piège à oxydes d'azote 19.

Bien entendu, d'autres types et arrangements de dispositifs de post-traitement sont possibles sans nuire à la généralité de l'invention. Notamment si le moteur est du type diesel, il peut être plutôt associé à un catalyseur d'oxydation, à un filtre à particules, ou encore à un catalyseur de réduction sélective des oxydes d'azote, lesquels peuvent constituer des dispositifs distincts ou être au moins en partie regroupés entre eux.

La tubulure d'échappement 16 comprend un volet d'échappement 20 dont la fermeture plus ou moins marquée permet de créer une contrepression à l'échappement. Son rôle dans le cadre de l'invention sera précisé plus loin.

Le circuit d'échappement 3 comprend un circuit de recirculation partielle à basse pression 21 des gaz d'échappement à l'admission du moteur, désigné aussi par l'expression « circuit EGR-LP ». Ce circuit prend naissance en un point du circuit d'échappement qui est situé dans l'exemple de la figure 1 en aval du deuxième dispositif de post-traitement 15. Son autre extrémité débouche en un point du circuit d'admission 14 situé en amont du compresseur 7. Le circuit EGR-LP comporte une vanne de réglage du débit des gaz recyclés 22, dite aussi « vanne EGR » 22. Il peut comporter un filtre 23 et un refroidisseur 24 des gaz d'échappement recyclés.

Le moteur est placé sous la supervision d'un calculateur (non représenté), qui détermine un certain nombre de paramètres de fonctionnement du moteur à partir d'un certain nombre de capteurs du moteur et du véhicule, et qui règle le moteur en conséquence en agissant sur un certain nombre d'actionneurs du moteur.

Par exemple, à partir du signal d'enfoncement d'une pédale d'accélérateur du véhicule et d'une mesure du régime N du moteur, le calculateur peut déterminer une consigne de couple C à fournir par le moteur, dont il déduit au moins : une consigne de débit d'air Qair,sp ; une consigne de débit de gaz recyclés Qegr,sp ou de manière équivalente une consigne de taux de gaz recyclés τegr,sp ; et, une consigne de débit de carburant Qcarb,sp.

Bien entendu, il peut aussi déduire d'autre paramètres de fonctionnement du moteur tels qu'une consigne de phasage de l'injection de carburant et une consigne d'avance à l'allumage, etc.

Pour régler le débit d'air Qair et le débit de gaz recyclés Qegr sur leurs valeurs de consigne, le calculateur peut, par exemple, régler le débit total des gaz d'admission Qadm, qui est la somme du débit d'air Qair et du débit des gaz recyclés Qegr, en ajustant le degré d'ouverture αpap du boîtier-papillon 11 ; le débit étant une fonction cartographiée de la pression Pcoll et de la température Tcoll régnant dans le répartiteur 10.

Le calculateur peut en parallèle régler le débit d'air Qair en boucle fermée sur la consigne de débit d'air Qair,sp en ajustant la position angulaire αegr de la vanne EGR 22. Pour cela le débit d'air Qair peut être mesuré par un débitmètre (non représenté) monté dans la conduite d'arrivée d'air 6 ; un signal d'erreur égal à la différence entre le débit d'air mesuré Qair et la consigne Qair,sp est entré dans un régulateur, par exemple de type PI (proportionnel-intégral), dont la sortie est un signal de correction de la position angulaire αegr,cor de la vanne EGR. Ledit signal de correction est ajouté à une position angulaire de pré-positionnement en boucle ouverte, pour obtenir la position angulaire αegr appliquée à la vanne EGR. Dans ce mode de réalisation, le débit de gaz recyclés Qegr est réglé indirectement, par différence entre le débit total des gaz d'admission Qadm et du débit d'air Qair. Le débit de carburant Qcarb est réglé en boucle ouverte, en ajustant une durée d'ouverture des injecteurs de carburant 4.

Dans un autre mode, le calculateur peut régler le débit des gaz recyclés Qegr en boucle fermée sur la consigne de débit de gaz recyclés Qegr,sp , et c'est le débit d'air qui est réglé indirectement comme la résultante de la différence entre le débit total Qadm et le débit des gaz recyclés Qegr. Pour cela, le calculateur peut, par exemple, déterminer le débit courant des gaz recyclés Qegr à partir d'une formule de Barré Saint Venant appliquée aux bornes du circuit EGR-LP, et faisant intervenir la valeur de la pression régnant en amont Pam du circuit EGR-LP, la valeur de la pression régnant à l'aval Pav du circuit EGR-LP, plus précisément en aval de la vanne EGR, et la valeur de la température en amont Tam du circuit EGR-LP, selon la formule suivante :

$$Qegr = [Pam \times Se_{EGRLP} / Tam \; ½] \times Cfe_{BSV}(Pav/Pam)$$

Formule dans laquelle

$Se_{EGRLP}$ désigne la section efficace du circuit EGR-LP, qui est une fonction de l'angle d'ouverture αegr de la vanne EGR, cartographiée à l'avance par des essais physiques ; et,

$Cfe_{BSV}$ désigne le coefficient de Barré Saint Venant, qui est une fonction du rapport de la pression aval divisée par la pression amont.

Par exemple, la valeur de la pression aval Pav peut être assimilée à la pression Pave régnant en amont du compresseur 7, ladite pression étant mesurée par un capteur (non représenté), ou elle peut être mesurée par un capteur indépendant (non représenté) implanté en aval de la vanne EGR. Par exemple, la valeur de la pression amont Pam peut être calculée comme la somme de la pression aval Pav et de la pression différentielle Pdiff régnant aux bornes du circuit EGR-LP, cette pression différentielle étant déterminée par un dispositif détaillé plus bas. On utilise par exemple un régulateur de type PI (proportionnel - intégral) pour réguler le débit des gaz EGR.

D'autres variantes de réglage du débit des gaz d'échappement recyclés sont connues de l'homme de métier et ne seront pas davantage exposées ici. Cependant, quel que soit le procédé de réglage utilisé, la circulation des gaz d'échappement à l'intérieur du circuit EGR-LP 21 n'est possible qu'à la condition qu'il règne un écart de pression positif suffisant entre le point de prélèvement des gaz d'échappement et le point du circuit d'admission où ils sont réintroduits. Or, dans le cadre d'un circuit de recirculation à basse pression, les gaz d'échappement à prélever sont déjà détendus par la turbine 13, et leur pression continue de baisser lors de la traversée des différents dispositifs de dépollution 14,15. Sur certains points de fonctionnement du moteur, il se peut que l'écart de pression soit insuffisant et que les gaz d'échappement ne puissent pas être aspirés correctement dans le circuit EGR-LP 21.

Selon l'état de la technique, le volet d'échappement 20 permet de pallier ce problème. Pour cela, le circuit EGR-LP 21 est équipé d'un dispositif 25 de détermination de la pression différentielle Pdiff du circuit EGR-LP. Plus précisément, il s'agit de l'écart entre la pression régnant au voisinage du point de prélèvement des gaz d'échappement, et la pression régnant au voisinage du point de réintroduction des gaz dans le circuit d'admission. Sur l'exemple illustré par la figure 1, ledit dispositif comprend un capteur de pression différentielle 26 relié à deux tuyaux de prise de pression amont et aval 27,28. Le tuyau de prise de pression amont 26 est relié, à une première extrémité, au capteur de pression différentielle 26, et à sa seconde extrémité, à un manchon 29 qui est enfoncé dans le circuit d'échappement 3, en un point situé en amont du point de départ du circuit EGR-LP. Le tuyau de prise de pression aval 28 est relié, à une première extrémité, au capteur de pression différentielle 26, et à sa seconde extrémité, à un manchon 30 qui est enfoncé dans le circuit EGR-LP situé à l'aval de la vanne EGR 22.

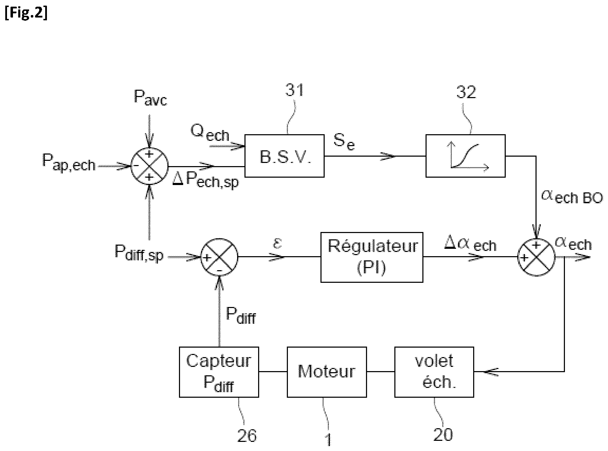

La pression différentielle Pdiff du circuit EGR-LP est alors réglée en boucle fermée sur une valeur de consigne Pdiff,sp , qui peut être déterminée par exemple en fonction du point de fonctionnement régime-charge du moteur, par exemple grâce à un régulateur de type PI, conformément à l'illustration de la figure 2.

La valeur mesurée de la pression différentielle Pdiff est soustraite de la valeur de consigne de pression différentielle Pdiff,sp dans un soustracteur, dont la sortie est un signal d'erreur ε alimentant un régulateur de type PI (proportionnel-intégral). Ce régulateur délivre en sortie une valeur de correction $\Delta \alpha$ech d'angle de volet d'échappement, qui est ajouté à une valeur de pré-positionnement en boucle ouverte $\alpha$ech$_{BO}$ pour obtenir la valeur de l'angle d'ouverture appliqué $\alpha$ech au volet d'échappement 20.

Ladite valeur de pré-positionnement (dite aussi de « feed forward ») peut être obtenue comme suit, à l'appui de la figure 2 : on commence par définir une consigne de pression différentielle $\Delta$Pech,sp aux bornes du volet d'échappement 20, comme égale à la somme de la consigne de pression différentielle Pdiff,sp du circuit EGR-LP 21 et de la pression avant le compresseur Pave, diminuée de la pression en aval du volet d'échappement Pap,ech. Cette dernière pression peut par exemple être assimilée à la pression atmosphérique. Puis, à partir de ladite valeur de consigne de pression différentielle aux bornes du volet d'échappement et d'une valeur du débit des gaz d'échappement Qech traversant le volet, on utilise une formule de Barré Saint Venant 31 pour déduire la valeur de section efficace Se correspondante du volet. Par exemple, le débit des gaz d'échappement peut être obtenu à partir du débit d'admission Qadm , en lui ajoutant le débit de carburant Qcarb. Enfin, on déduit d'une cartographie 32 correspondant à une courbe aéraulique du volet d'échappement 20, représentant la relation entre sa section efficace Se et son degré d'ouverture $\alpha$ech , la valeur de pré-positionnement du volet $\alpha$ech$_{BO}$ qui est à appliquer, de façon à accélérer la régulation.

Grâce à la régulation de la pression différentielle du circuit EGR-LP, on peut ainsi obtenir, pour tous les points de fonctionnement du moteur, une circulation suffisante des gaz d'échappement dans le circuit EGR-LP qui permet d'atteindre des taux de recyclage $\tau$egr élevés. La quantité de gaz recyclés Qegr peut quant à elle rester régulée par une des méthodes qui ont été exposés plus haut, par exemple en ajustant la position angulaire de la vanne EGR 22.

Cependant, de tels procédés de régulation de la quantité de gaz d'échappement recyclés Qegr, dans lesquels on régule la pression différentielle Pdiff du circuit EGR-LP en boucle fermée sur une consigne, sont sensibles aux fuites de gaz du circuit EGR-LP. Plus précisément, les tuyaux de prise de pression amont 27 et aval 28, ainsi que les manchons 29,30 auxquels ils sont reliés, sont souvent en matière plastique, lesdits tuyaux 27,28 étant par exemple soudés ou vissés sur lesdits manchons 29,30, et lesdits manchons 29,30 étant enfoncés dans des orifices ménagés respectivement dans une tubulure du circuit d'échappement et dans une tubulure du circuit EGR-LP. Il y a un risque qu'un tuyau de prise de pression se désolidarise de son manchon et/ou qu'un manchon ne reste pas suffisamment enfoncé dans la tubulure concernée, surtout du côté amont du circuit EGR-LP 21 où les pressions et les températures sont les plus élevées. Il en résulte un risque de fuite de gaz d'échappement, qui perturbe la régulation du débit des gaz d'échappement recyclés et qui peut donc augmenter les émissions polluantes du moteur et/ou sa consommation de carburant. En outre, ces gaz chauds peuvent s'avérer dangereux pour la fiabilité de certains composants du véhicule qui se trouvent sous le capot moteur.

On connaît de l'état de la technique plusieurs procédés qui visent à diagnostiquer un circuit de recirculation partielle à basse pression des gaz d'échappement à l'admission d'un moteur. Par exemple, la publication JP2013-144961A divulgue un procédé basé sur l'analyse de la pression en amont de la vanne EGR lorsque la vanne EGR est fermée, et sur la valeur de pression différentielle qui est détectée. Le dispositif ne présente pas de capteur de pression différentielle du circuit EGR-LP complet. Le procédé ne permet pas de diagnostiquer spécifiquement les fuites dues à un dispositif de mesure de la pression différentielle 21 du circuit EGR-LP tel qu'il est illustré à la figure 1.

On connaît de la publication US2012/0312283 A1 un procédé de pilotage d'un système EGR-LP visant à empêcher un reflux de gaz d'échappement recyclés dans le circuit EGR-LP. Le procédé comprend : la détermination d'une consigne de pression différentielle entre l'amont et l'aval de la vanne EGR-LP ; la mesure d'une valeur courante de la pression différentielle ; la comparaison de ladite valeur courante avec la valeur de consigne ; et, l'empêchement d'un reflux par la fermeture partielle d'une vanne EGR-LP de type trois voies montée au point de prélèvement des gaz EGR-LP sur la ligne d'échappement, lorsque la valeur courante de la pression différentielle est inférieure à la valeur de consigne. La valeur de consigne est par exemple la valeur minimale de pression différentielle qui empêche un tel reflux de gaz d'échappement recyclés. Après l'étape de réglage de la vanne EGR-LP, le procédé peut comprendre des étapes supplémentaires, comprenant : une nouvelle mesure de la valeur courante de la pression différentielle ; une comparaison de ladite valeur courante avec la valeur de consigne ; si ladite valeur courante est inférieure à la valeur de consigne ; la poursuite d'une phase d'attente pendant une durée déterminée. Une défaillance du cricuit EGR-LP est détectée, et le fonctionnement du circuit est arrêté, si la valeur mesurée de la pression différentielle reste inférieure à la valeur de consigne pendant la phase d'attente.

On connaît de la publication US2015/053186-A1 un procédé de contrôle d'un débit de gaz EGR basé sur la position d'une vanne EGR, tenant compte des erreurs de position de la vanne et des erreurs de section efficace dues à l'encrassement par des particules. Le procédé comprend : la fermeture de la vanne EGR ; la diminution de l'ouverture d'une vanne d'admission du moteur, jusqu'à ce que la valeur de la pression différentielle entre l'amont et l'aval de la vanne EGR atteigne une valeur seuil ; et, pendant que la valeur de la pression différentielle est maintenue, l'apprentissage d'une correction de débit de fuite, basée sur l'oxygène admis dans le moteur, et l'ajustement de la position de la vanne EGR, lors du mode de fonctionnement avec EGR du moteur, en fonction des paramètres de fonctionnement du moteur et de ladite correction de débit de fuite.

On connaît encore de la publication EP3085930-A1 un procédé visant à améliorer la stabilité du réglage du débit de gaz EGR-LP dans lequel deux actionneurs sont ajustés de manière concomitante pour ajuster le débit, d'une part une vanne EGR-LP, et d'autre part une vanne d'admission d'air située en amont d'un compresseur d'un turbocompresseur du moteur, qui sert à augmenter la pression différentielle dans le circuit EGR-LP. Ce document ne concerne pas un diagnostic du circuit.

On connaît encore de la publication WO2016/088097-A1 un procédé de détection d'une fuite ou d'une défaillance d'un circuit EGR basé sur la mesure d'un débit d'air admis dans le moteur, d'un débit de carburant, d'une valeur mesurée de la richesse du mélange admis dans le moteur et d'une valeur de richesse théorique.

On connaît encore de la publication US2018/195446-A1 un procédé de détection et de distinction entre une erreur de débit de gaz EGR et une erreur de la dynamique du réglage du débit, à partir de quotients énergétiques basés sur l'énergie de signaux filtrés de débits de gaz EGR mesurés et de débits de gaz EGR modélisés.

On connaît encore de la publication US2015/101327 un procédé de réglage d'un débit de gaz EGR, comprenant une étape de détermination d'un point de référence d'un capteur de concentration d'oxygène du moteur qui est défini à une valeur de pression d'admission de référence, au ralenti du moteur et sans injection de carburant. Le débit des gaz EGR est ajusté à partir d'une estimation de la concentration d'oxygène estimée par le capteur relativement à son point de référence, et à partir d'une modification d'une valeur de la pression d'admission par rapport à une valeur de pression d'admission de référence.

On connaît encore de la publication EP3726043-A1 un procédé de détection d'une anomalie d'un capteur de pression différentielle dans un circuit EGR-LP. Les mesures du capteur étant perturbées par des pulsations à l'échappement lorsque la pression différentielle est faible, on règle la pression différentielle à une valeur plus élvée, par exemple 5 kPa, à laquelle ces erreurs de mesure sont moindres. Pour cela, une vanne d'admission d'air du moteur située en amont d'un compresseur est réglée dans le sens de la fermeture de manière à régler la pression en amont du compresseur, correspondant à la pression en aval de la vanne EGR-LP, sur une valeur de consigne de pression en amont du compresseur. Cette valeur est par exemple égale à la pression atmosphérique, qui correspond à la pression en amont de la vanne EGR-LP, diminuée des 5 kPa correspondant à la pression différentielle visée. L'ouverture de la vanne EGR-LP, qui permet de régler le débit des gaz EGR, est réglée à partir de la valeur mesurée de la pression différentielle par le capteur de pression différentielle. Une anomalie du capteur est détectée lorsque l'écart entre d'une part, la valeur de pression différentielle mesurée par le capteur de pression et, d'autre part, la différence entre la pression atmosphérique et une valeur mesurée de la pression en amont du compresseur, est supérieur à un seuil.

## Présentation de l'invention

La présente invention vise à remédier aux défauts des procédés connus de diagnostic d'un circuit de recirculation partielle des gaz d'échappement à l'admission d'un moteur.

Le procédé selon l'invention propose pour cela un procédé de détection des fuites de gaz d'un moteur à combustion interne dans un circuit de recirculation partielle à basse pression des gaz d'échappement à l'admission dudit moteur selon la revendication indépendante 1, le débit desdits gaz recyclés à l'admission étant réglé par des étapes comprenant au moins la régulation en boucle fermée autour d'une consigne de la pression différentielle régnant aux bornes dudit circuit de recirculation et l'ajustement de la position d'une vanne du circuit de recirculation.

La principale caractéristique du procédé selon l'invention est qu'il comprend :

- une étape de détermination d'une valeur de consigne de ladite pression différentielle ;

- une étape de régulation de ladite pression différentielle autour de ladite consigne pendant une durée prédéterminée ;

- une étape de mesure de la valeur de ladite pression différentielle lorsque ladite durée prédéterminée est écoulée ;

- une étape de calcul de l'écart entre ladite valeur et ladite consigne, et de comparaison de la valeur absolue dudit écart avec un seuil d'écart de boucle de régulation prédéterminé ; et,

- des étapes de diagnostic concluant que le circuit de recirculation est en bon état lorsque ladite valeur absolue est inférieure audit seuil d'écart de boucle, ou qu'il présente des fuites dans le cas contraire.

**Brève description des figures**

D'autres caractéristiques et avantages de l'invention apparaîtront à la lecture de la description qui suit d'un mode de réalisation non limitatif de l'invention, à l'appui des figures annexées, dans lesquelles :

[Fig. 1] est une vue schématique d'un dispositif de motorisation apte à la mise en oeuvre du procédé selon l'invention.

[Fig. 2] représente un dispositif de régulation en boucle fermée de la pression différentielle d'un circuit de recirculation partielle à basse pression des gaz d'échappement d'un moteur conforme à la figure 1

[Fig.3] est un logigramme des étapes d'un mode de réalisation du procédé de diagnostic selon l'invention.

**Description détaillée des figures**

Dans la description qui va suivre, des chiffres de référence identiques désignent des pièces identiques ou ayant des fonctions similaires.
Les figures 1 et 2 ont déjà été décrites plus haut dans le cadre d'un dispositif de motorisation selon l'état de la technique et d'un procédé de régulation de la pression différentielle d'un circuit EGR-LP selon l'état de la technique. Elles ne nécessitent pas de complément de description. On notera cependant que le dispositif apte à la mise en oeuvre du procédé de diagnostic selon l'invention est aussi conforme à la figure 1, et que le procédé de régulation de la figure 2 est aussi mis en oeuvre dans le cadre du procédé de diagnostic selon l'invention.
Le procédé de diagnostic selon l'invention se fonde sur le principe suivant : la pression différentielle Pdiff du circuit EGR-LP étant régulée en boucle fermée sur une consigne en utilisant une mesure de la pression différentielle Pdiff mesurée de manière continue, si il n'y a pas de fuite de gaz d'échappement dans le circuit, plus particulièrement aux interfaces du dispositif de mesure de la pression différentielle 25, alors la valeur de la pression converge sur la valeur de consigne dans une durée prédéterminée qui est une fonction du réglage des coefficients du régulateur.
Cette convergence est d'autant plus rapide que la régulation comprend un pré-positionnement en boucle ouverte de la position du volet d'échappement, comme prévu sur la figure 2, et que d'autre part, la consigne de pression différentielle Pdiff,sp elle-même est assez stable. On entend par là que la variation temporelle de la consigne de pression différentielle est inférieure à un seuil, en valeur absolue, de sorte que la convergence de la régulation ne soit pas trop retardée par une hausse ou par une baisse brutale de la consigne. Cette stabilité de la consigne de pression différentielle correspond notamment à un fonctionnement du moteur à régime et à charge stabilisés.
En revanche, dans le cas d'une fuite, la valeur mesurée de la pression différentielle ne converge pas sur sa valeur de consigne dans la même durée prédéterminée, et il se peut même qu'elle soit incapable de converger sur cette consigne dans le cas où la fuite est importante (par exemple, cas d'un manchon complètement déboîté).

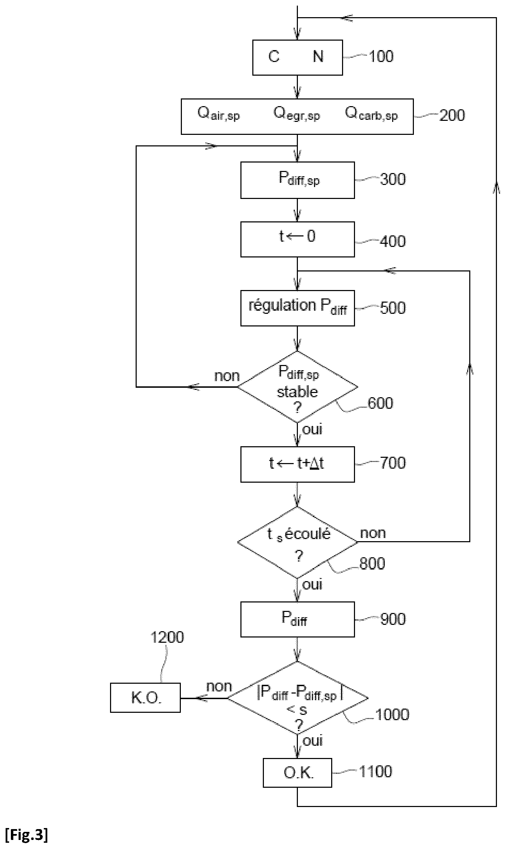

La figure 3 représente un logigramme des étapes détaillées du procédé de diagnostic correspondant, dans un mode de réalisation de l'invention.
Le procédé est itératif et comprend des étapes qui se répètent à des instants t successifs séparés d'un pas de temps donné $\Delta t$. Il comprend une étape de détermination 100 d'une valeur de couple C moteur et de régime moteur N, puis, à partir de ces valeurs, une étape de détermination de valeurs de consigne de débit d'air Qair,sp , de débit de gaz d'échappement recyclés Qegr,sp et de débit de carburant Qcarb.
Le procédé se poursuit par une étape 300 de détermination d'une consigne de pression différentielle Pdiff,sp du circuit EGR-LP 21, qui peut dépendre du point de fonctionnement du moteur. On notera que de préférence, on choisit une consigne de pression différentielle relativement élevée dans le cas où les gaz d'échappement ne circuleraient pas naturellement dans le circuit EGR-LP en réglant uniquement la vanne EGR 22, sans refermer au moins partiellement le volet d'échappement 20, c'est-à-dire essentiellement à bas régime et à faible charge. A haut régime et/ou charge élevée, il n'est pas forcément nécessaire de prévoir une telle régulation de la pression différentielle par le volet d'échappement car la circulation de gaz est généralement possible facilement. D'autre part, même si la consigne de pression différentielle est relativement élevée, il convient néanmoins de la limiter pour ne pas augmenter inutilement la consommation de carburant du moteur.

Le procédé se poursuit par une étape 400 d'initialisation d'un compteur de temps. Ce compteur prend une valeur égale à 0 à l'instant où la régulation de la pression différentielle Pdiff autour de sa consigne Pdiff,sp commence. Le procédé comprend une étape 600 de régulation de la pression différentielle, selon le procédé illustré à la figure 2. Quand un pas de temps Δt est écoulé, le procédé se poursuit par une étape 600 dans laquelle on vérifie si la consigne de pression différentielle Pdiff,sp est sensiblement stable par rapport à la valeur précédente. Par exemple on peut vérifier si la variation temporelle de la pression différentielle est inférieure à un seuil prédéterminé, en valeur absolue.

Si tel n'est pas le cas (réponse NON), le procédé reprend à l'étape 300. Dans le cas contraire, c'est-à-dire si la stabilité est constatée, le procédé se poursuit par une étape 700 dans laquelle le compteur de temps est incrémenté de la valeur du pas de temps Δt prédéterminé, puis il se poursuit par une étape de test 800 au cours de laquelle on vérifie si une durée prédéterminée $t_s$ est écoulé. Pour cela on compare la valeur du compteur de temps de l'étape 700 à ladite durée prédéterminée. Cette dernière correspond à la durée normale de convergence de la régulation de la pression différentielle sur sa consigne, c'est-à-dire, en l'absence de fuite.

Tant que cette durée n'est pas écoulée (réponse NON), le procédé reprend à l'étape 500 dans laquelle la régulation se poursuit. Dès qu'elle est écoulée, on relève la valeur instantanée de la pression différentielle Pdiff au cours d'une étape de mesure 900, puis, au cours d'une étape de test 1000, on calcule l'écart entre la pression différentielle et la consigne, et on compare la valeur absolue de cet écart avec un seuil S, dit seuil d'écart de boucle de régulation.

Si ladite différence est inférieure audit seuil S, le procédé de diagnostic se poursuit par une étape 1100 de diagnostic proprement dit dans laquelle le circuit EGR-LP est considéré être en bon état. Dans le cas contraire, le procédé oriente vers une autre étape de diagnostic 1200 dans laquelle le circuit EGR-LP est déclaré défaillant, c'est-à-dire, présente des fuites. Cette étape peut alors notamment conduire à l'allumage d'un voyant sur le tableau de bord du véhicule et/ou à la mise en oeuvre d'un mode de fonctionnement dégradé du moteur et du véhicule, pour éviter qu'il n'émette dans l'atmosphère extérieure des quantités d'oxydes d'azote dépassant les normes réglementaires, et des gaz chauds dans le compartiment moteur du véhicule.

## Revendications

1. Procédé de diagnostic de fuites de gaz d'un moteur à combustion interne (1) dans un circuit de recirculation (21) partielle à basse pression des gaz d'échappement à l'admission (2) dudit moteur (1), le débit (Qegr) desdits gaz recyclés à l'admission étant réglé par des étapes comprenant au moins la régulation en boucle fermée autour d'une consigne (Pdiff,sp) de la pression différentielle (Pdiff) régnant aux bornes dudit circuit de recirculation (21) et l'ajustement de la position d'une vanne (22) du circuit de recirculation (21), ledit procédé comprenant :

   - une étape (300) de détermination d'une valeur de consigne (Pdiff,sp) de ladite pression différentielle ;

   **CARACTERISE EN CE QU'**il comporte en outre :

   - une étape (500) de régulation de ladite pression différentielle (Pdiff) autour de ladite consigne (Pdiff,sp) pendant une durée prédéterminée ($t_s$) correspondant à la durée normale de convergence de la régulation de la pression différentielle sur sa consigne en l'absence de fuite;
   - une étape de mesure (900) de la valeur de ladite pression différentielle (Pdiff) lorsque ladite durée prédéterminée est écoulée ;
   - une étape de calcul (1000) de l'écart entre ladite valeur (Pdiff) et ladite consigne (Pdiff,sp), et de comparaison de la valeur absolue dudit écart avec un seuil d'écart de boucle de régulation (S) prédéterminé ; et,
   - des étapes de diagnostic (1100,1200) concluant que le circuit de recirculation (21) est en bon état lorsque ladite valeur absolue est inférieure audit seuil d'écart de boucle (S), ou qu'il présente des fuites dans le cas contraire.

2. Procédé selon la revendication 1, **caractérisé en ce que** l'étape de régulation (500) de la pression différentielle (Pdiff) n'est poursuivie que si la consigne de pression différentielle (Pdiff,sp) est sensiblement stable.

3. Procédé selon la revendication 1, **caractérisé en ce qu'**il comprend, pour vérifier que la consigne de pression différentielle (Pdiff,sp) est sensiblement stable, une étape (600) dans laquelle on vérifie que la variation temporelle de ladite consigne (Pdiff,sp) est inférieure à un seuil.

4. Procédé selon l'une quelconque des revendications précédentes, **caractérisé en ce que** la régulation de la pression différentielle (Pdiff) est réalisée par l'ajustement du degré d'ouverture ($\alpha$ech) d'un volet d'échappement (20) du moteur.

5. Procédé selon l'une quelconque des revendications précédentes, **caractérisé en ce que** la régulation de la pression différentielle (Pdiff) est réalisée par un régulateur de type proportionnel-intégral.

6. Procédé selon l'une quelconque des revendications 4 ou 5, **caractérisé en ce que** la régulation de la pression différentielle (Pdiff) comprend la détermination d'une valeur de pré-positionnement ($\alpha$ech$_{BO}$) en boucle ouverte du volet et d'une valeur de correction ($\Delta\alpha$ech) d'angle du volet, à ajouter à la valeur de pré-positionnement ($\alpha$ech$_{BO}$) pour le réglage de la position du volet.

7. Procédé selon la revendication précédente, **caractérisé en ce que** ladite valeur de pré-positionnement ($\alpha$ech$_{BO}$) en boucle ouverte du volet est déterminée à partir d'une valeur de la section efficace (Se) du circuit de recirculation (21).

8. Procédé selon la revendication précédente, **caractérisé en ce que** ladite section efficace (Se) du circuit de recirculation est déterminée par une formule de Barré Saint Venant à partir du débit des gaz d'échappement (Qech) du moteur et d'une valeur de pression différentielle ($\Delta$Pech,sp) aux bornes du volet d'échappement.

9. Procédé selon la revendication précédente, **caractérisé en ce que** ladite valeur de pression différentielle ($\Delta$Pech,sp) est calculée comme la somme de la consigne de pression différentielle du circuit de recirculation (Pdiff,sp) et de la pression en aval du volet d'échappement (Pap,ech) diminuée de la pression (Pav) en aval de la vanne (22) du circuit de recirculation.

10. Procédé selon la revendication précédente, **caractérisé en ce que** la pression en aval du volet d'échappement (Pap,ech) est assimilée à la pression atmosphérique, et que la pression en aval de la vanne (Pav) du circuit de recirculation (21) est assimilée à une valeur de pression (Pave) mesurée en amont d'un compresseur (7) de turbocompresseur (8) de suralimentation du moteur.

## Patentansprüche

1. Verfahren zur Diagnose von Gaslecks eines Verbrennungsmotors (1) in einer partiellen Niederdruckrückführung (21) der Abgase zum Einlass (2) des Motors (1), wobei der Durchsatz (Qegr) der zum Einlass rückgeführten Gase durch Schritte geregelt wird, die mindestens das Regeln, mit geschlossenem Regelkreis, des an den Anschlüssen der Rückführung (21) herrschenden Differenzdrucks (Pdiff) um einen Sollwert (Pdiff,sp) und das Einstellen der Position eines Ventils (22) der Rückführung (21) beinhalten, wobei das Verfahren Folgendes beinhaltet:

   - einen Schritt (300) des Bestimmens eines Werts des Sollwerts (Pdiff,sp) des Differenzdrucks;

   **DADURCH GEKENNZEICHNET, DASS** es ferner Folgendes umfasst:

   - einen Schritt (500) des Regelns des Differenzdrucks (Pdiff) um den Sollwert (Pdiff,sp) während einer vorbestimmten Dauer ($t_s$), die der normalen Konvergenzdauer der Regelung des Differenzdrucks auf seinen Sollwert entspricht, wenn kein Leck vorhanden ist;
   - einen Schritt des Messens (900) des Werts des Differenzdrucks (Pdiff), wenn die vorbestimmte Dauer verstrichen ist;
   - einen Schritt des Berechnens (1000) der Abweichung zwischen dem Wert (Pdiff) und dem Sollwert (Pdiff,sp) und des Vergleichens des Absolutwerts der Abweichung mit einem vorbestimmten Abweichungsschwellenwert des Regelkreises (S); und
   - Diagnoseschritte (1100, 1200), die die Schlussfolgerung ziehen, dass sich die Rückführung (21) in einem ordnungsgemäßen Zustand befindet, wenn der Absolutwert kleiner als der Abweichungsschwellenwert des Kreises (S) ist, oder, im gegenteiligen Fall, dass diese Lecks aufweist.

**2.** Verfahren nach Anspruch 1, **dadurch gekennzeichnet, dass** der Schritt des Regelns (500) des Differenzdrucks (Pdiff) nur dann fortgesetzt wird, wenn der Differenzdrucksollwert (Pdiff,sp) im Wesentlichen stabil ist.

**3.** Verfahren nach Anspruch 1, **dadurch gekennzeichnet, dass** es zur Überprüfung, ob der Differenzdrucksollwert (Pdiff,sp) im Wesentlichen stabil ist, einen Schritt (600) beinhaltet, während dessen überprüft wird, ob die zeitliche Variation des Sollwerts (Pdiff,sp) unter einem Schwellenwert liegt.

**4.** Verfahren nach einem beliebigen der vorhergehenden Ansprüche, **dadurch gekennzeichnet, dass** das Regeln des Differenzdrucks (Pdiff) durch das Einstellen des Öffnungsgrads ($\alpha$ech) einer Abgasklappe (20) des Motors durchgeführt wird.

**5.** Verfahren nach einem beliebigen der vorhergehenden Ansprüche, **dadurch gekennzeichnet, dass** das Regeln des Differenzdrucks (Pdiff) durch einen Proportional-Integral-Regler durchgeführt wird.

**6.** Verfahren nach einem beliebigen der Ansprüche 4 oder 5, **dadurch gekennzeichnet, dass** das Regeln des Differenzdrucks (Pdiff) das Bestimmen eines Vorpositionierungswerts ($\alpha$ech$_{BO}$) der Klappe bei offenem Regelkreis und eines Korrekturwerts ($\Delta\alpha$ech) des Winkels der Klappe, der für die Regelung der Position der Klappe zu dem Vorpositionierungswert ($\alpha$ech$_{BO}$) hinzuzufügen ist, beinhaltet.

**7.** Verfahren nach dem vorhergehenden Anspruch, **dadurch gekennzeichnet, dass** der Vorpositionierungswert ($\alpha$ech$_{BO}$) der Klappe bei offenem Regelkreis anhand eines Werts des wirksamen Querschnitts (Se) der Rückführung (21) bestimmt wird.

**8.** Verfahren nach dem vorhergehenden Anspruch, **dadurch gekennzeichnet, dass** der wirksame Querschnitt (Se) der Rückführung mit Hilfe einer Formel von Barré de Saint-Venant anhand des Durchsatzes der Abgase (Qech) des Motors und eines Differenzdruckwerts ($\Delta$Pech,sp) an den Anschlüssen der Abgasklappe bestimmt wird.

**9.** Verfahren nach dem vorhergehenden Anspruch, **dadurch gekennzeichnet, dass** der Differenzdruckwert ($\Delta$Pech,sp) als die Summe aus dem Differenzdrucksollwert der Rückführung (Pdiff,sp) und dem Druck stromabwärts der Abgasklappe (Pap,ech), vermindert um den Druck (Pav) stromabwärts des Ventils (22) der Rückführung, berechnet wird.

**10.** Verfahren nach dem vorhergehenden Anspruch, **dadurch gekennzeichnet, dass** der Druck stromabwärts der Abgasklappe (Pap,ech) dem Atmosphärendruck gleichgesetzt wird und dass der Druck stromabwärts des Ventils (Pav) der Rückführung (21) einem Druckwert (Pavc) gleichgesetzt wird, der stromaufwärts eines Kompressors (7) eines Turboladers (8) des Motors gemessen wird.

**Claims**

**1.** Method for diagnosing gas leaks from an internal combustion engine (1), in a recirculation circuit (21) for partial recirculation of the exhaust gases at low pressure to the intake (2) of said engine (1), the flow rate (Qegr) of said gases recycled to the intake being adjusted by steps comprising at least controlling, in a closed loop about a setpoint (Pdiff,sp), the differential pressure (Pdiff) prevailing across the terminals of said recirculation circuit (21) and setting the position of a valve (22) of the recirculation circuit (21), said method comprising:

   - a determination step (300) for determining a setpoint value (Pdiff,sp) for said differential pressure;

**CHARACTERIZED IN THAT** it moreover includes:

   - a control step (500) for controlling said differential pressure (Pdiff) about said setpoint (Pdiff,sp) for a predetermined period of time ($t_s$) corresponding to the normal period of time needed for the control of the differential pressure to converge on its setpoint when there is no leak;
   - a measurement step (900) for measuring the value of said differential pressure (Pdiff) when said predetermined period of time has elapsed;
   - a calculation step (1000) for calculating the difference between said value (Pdiff) and said setpoint (Pdiff,sp) and comparing the absolute value of said difference with a predetermined control-loop difference threshold (S); and

- diagnosis steps (1100, 1200) concluding that the recirculation circuit (21) is in good condition when said absolute value is less than said loop difference threshold (S), or that it has leaks otherwise.

2. Method according to Claim 1, **characterized in that** the control step (500) for controlling the differential pressure (Pdiff) is only pursued if the differential pressure setpoint (Pdiff,sp) is substantially stable.

3. Method according to Claim 1, **characterized in that** it comprises, in order to check whether the differential pressure setpoint (Pdiff,sp) is substantially stable, a step (600) in which a check is made as to whether the change in said setpoint (Pdiff,sp) over time is less than a threshold.

4. Method according to any one of the preceding claims, **characterized in that** the differential pressure (Pdiff) is controlled by setting the degree of opening ($\alpha$ech) of an exhaust flap (20) of the engine.

5. Method according to any one of the preceding claims, **characterized in that** the differential pressure (Pdiff) is controlled by a proportional integral controller.

6. Method according to either one of Claims 4 and 5, **characterized in that** the control of the differential pressure (Pdiff) comprises determining an open-loop pre-positioning value ($\alpha$ech$_{BO}$) for the flap and a correction value ($\Delta\alpha$ech) for the angle of the flap, which is to be added to the prepositioning value ($\alpha$ech$_{BO}$) to control the position of the flap.

7. Method according to the preceding claim, **characterized in that** said open-loop pre-positioning value ($\alpha$ech$_{BO}$) for the flap is determined on the basis of a value for the effective cross section (Se) of the recirculation circuit (21).

8. Method according to the preceding claim, **characterized in that** said effective cross section (Se) of the recirculation circuit is determined by a Barré Saint-Venant formula on the basis of the exhaust gas flow rate (Qech) of the engine and a differential pressure value ($\Delta$Pech,sp) across the terminals of the exhaust flap.

9. Method according to the preceding claim, **characterized in that** said differential pressure value ($\Delta$Pech,sp) is calculated as the sum of the differential pressure setpoint (Pdiff,sp) of the recirculation circuit and the pressure (Pap,ech) downstream of the exhaust flap minus the pressure (Pav) downstream of the valve (22) of the recirculation circuit.

10. Method according to the preceding claim, **characterized in that** the pressure (Pap,ech) downstream of the exhaust flap is equated to atmospheric pressure, and **in that** the pressure (Pav) downstream of the valve of the recirculation circuit (21) is equated to a pressure value (Pave) measured upstream of a compressor (7) of a turbocharger (8) for supercharging the engine.

[Fig.1]

[Fig.2]

**[Fig.3]**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2013144961 A
- US 20120312283 A1
- US 2015053186 A1
- EP 3085930 A1
- WO 2016088097 A1
- US 2018195446 A1
- US 2015101327 A
- EP 3726043 A1